# EUROPEAN PATENT APPLICATION

(11) **EP 4 793 493 A1**
(43) Date of publication of application: **19.08.2026**
(21) Application number: 25171056.2
(22) Date of filing: 16.04.2025
(51) Int. Cl.: F03D 13/10, F03D 80/00

(54) **DAMPING DEVICE FOR DAMPING ROTOR BLADE VIBRATIONS**

(30) Priority: 17.02.2025 EP 25158312
(71) Applicant: Siemens Gamesa Renewable Energy A/S, 7330 Brande (DK)
(72) Inventor: Grishauge, Nikolai Bak, 9240 Nibe (DK); Enevoldsen, Peder Bay, 7100 Vejle (DK); Jokumsen, Anders Breum, 9200 Aalborg sv (DK); Eskildsen, Finn, 9210 Aalborg SØ (DK); Thomsen, Anders Haslund, 9270 Klarup (DK)
(74) Representative: SGRE-Association

(57) **Abstract**

A damping device for a rotor blade of a wind turbine is provided. The damping device (10) is configured to damp vibrations of the rotor blade (100) in a non-operating condition of the rotor blade when mounted to the rotor blade (100). The damping device (10) comprises a body (15) configured to be mounted to the rotor blade (100). The body (15) has a first protruding section (41) configured to protrude from a pressure side (104) of the rotor blade and/or has a second protruding section (42) that is configured to protrude from a suction side (103) of the rotor blade. The body (15) is made of a plastic material and is at least partially enclosed in a shell (16). A rigidity, hardness, and/or a density of a material of the shell (16) is higher than a rigidity, hardness, and/or a density, respectively, of the material of the body (15).

## Description

### FIELD OF THE INVENTION

The present invention relates to a damping device for a rotor blade of a wind turbine, to a damping assembly, and to a rotor blade comprising such damping device or damping assembly. It further relates to a method of damping vibrations for a rotor blade.

### BACKGROUND

Wind turbines are employed as renewable energy sources. To extract more energy from the wind, larger wind turbines requiring larger blades are being manufactured and installed. Long slender blades may be prone to blade vibrations, such as from VIV (Vortex Induced Vibrations) and SIV (Stall Induced Vibrations). Such vibrations may, in particular, compromise the stability of a rotor blade during the installation phase of a wind turbine. Depending on the wind direction, the orientation of the wind turbine and blades, and the number of blades installed (e.g., one, two, or three), different instability ranges may occur which can trigger for example edgewise oscillations of the rotor blade. These oscillations may result in significant load levels and in extreme cases, the structural integrity of the rotor blade may be compromised.

The problem may be accentuated during the installation phase of a wind turbine. Due to the operation of cranes and the limited amount of control of the turbine, it may not always be possible to orient the wind turbine into a preferred direction with respect to the wind. In particular when the wind comes from the side relative to the orientation of the blades, i.e. at an angle of 90 degrees relative to the yaw direction, or at angles close to +-45 degrees with respect to the yaw direction, a rather unfavorable vibration situation may occur, which may result in the excitation of significant VIV and SIV. In this context, the term yaw direction is understood as the direction in which the axis of rotation of the turbine is pointing towards. For example, when installing blades of a wind turbine using a crane, the wind turbine may not be able to yaw into a position of favorable blade stability with respect to the prevailing wind direction because of the risk of collision with the crane.

The document CN 117552924 A describes a device that is attached to a wind turbine rotor blade to suppress vortex-induced vibrations. The device comprises a cuboid block attached to a rotor blade surface. The document EP 4093963 A1 describes a device with a flexible base that is partly wrapped around the blade and that has a spoiler for damping vibrations. The device has a rather complex structure that may be difficult to manufacture, and the device is not easily installed. The document EP 4 123 162 A1 describes another device for reducing vibrations. However, such device has a rather complex shape and is likewise difficult to install. The document EP 3795824 A1 describes a further apparatus for mitigating vortex-shedding vibrations or stall-induced vibrations. This apparatus may be wrapped around the blade. However, the aerodynamic damping provided by this kind of apparatus is rather limited. A wind turbine blade oscillation preventer is described in the document EP 3240952 A1. The preventer is provided in form of a sleeve or bag that is draped over the end of a rotor blade.

Although several solutions exist for vibration damping, they may be complex, difficult to install, and/or provide a rather limited damping. Further, existing devices may be rather bulky and heavy. If such device becomes lose and falls of a rotor blade, personal injury may result. If making the devices of foam, they may not be able to withstand the forces applied at high wind speeds, and may thus provide insufficient damping. It is desirable to provide a durable and inexpensive damping device that is easy to install and safe to use, and that provides efficient vibration damping.

### SUMMARY

There is accordingly a need to mitigate at least some of the drawbacks mentioned above and to provide an improved damping device for rotor blades that are not in operation, in particular a damping device that is safe to use and that provides efficient damping.

This need is met by the features of the independent claims. The dependent claims describe embodiments of the invention.

According to an aspect of the invention, a damping device for a rotor blade of a wind turbine is provided, wherein the damping device is configured to damp vibrations of the rotor blade in a non-operating condition of the rotor blade, in particular in a non-operating condition of the wind turbine, when mounted to the rotor blade.

A non-operating condition of the rotor blade may refer to a condition in which the rotor blade does not rotate as part of the wind turbine rotor to generate electrical power. A non-operating condition of the rotor blade may for example be a condition in which the wind turbine is in standstill or in a park position, a condition in which not all rotor blades have been mounted to the wind turbine rotor, an installation, servicing, commissioning or maintenance situation, a passive or active idle mode, and the like. It is preferably a condition in which the rotor blade is not operated to harvest wind energy.

Optionally, the damping device may comprises a body made of a plastic material and configured to be mounted to the rotor blade. The body of the damping device may have a first protruding section configured to protrude from a pressure side of the rotor blade when the damping device is mounted to the rotor blade and/or wherein the body of the damping device may have a second protruding section that is configured to protrude from a suction side of the rotor blade when the damping device is mounted to the rotor blade.

Optionally, the body may at least partially be enclosed in a shell. Preferably, a rigidity (e.g. stiffness) and/or density of a material of the shell may be higher than a rigidity (e.g. stiffness) and/or density of the material of the body. For example, the shell material may be stiffer and/or may have a higher hardness than the body material.

Such damping device may provide efficient spoiling of an air flow past the blade by means of the respective protruding sections. Further, the configuration may allow the body of the damping device to be made of a lightweight plastic material. Accordingly, the density of the body material and the weight can be kept low. Should the device become detached from a rotor blade and fall down, the low weight can significantly reduce the risk that the device causes personal injury. Further, in view of the increased rigidity, hardness, and/or density of the shell provided on the device body, the pressure that can be exerted on the device when installing the device can be increased significantly without damaging and/or deforming the device. Thereby, the risk that the device will become detached from the rotor blade is reduced, which further reduces the risk of personal injury due to falling objects. A twofold benefit may thus be achieved. Even further, the shell allows the protruding section(s) to protrude further outwardly than protrusions of comparable devices, since the increased rigidity of the protruding section(s) due to the shell allows it/them to withstand higher wind forces. The damping device may thereby provide improved aerodynamic damping. Due to the increased rigidity, it is also possible to reduce the size, e.g. thickness, of the protruding section(s) while achieving a comparable spoiling effect as a conventional device. This may further reduce the weight and size of the device.

Even further, the shell may provide increased friction (e.g. higher friction coefficient of static and/or kinetic friction) compared to the body material in the interface area in contact with the blade. The device can thus more securely be mounted to the blade. Further, such shell may provide improved UV resistance and/or an improved water repelling effect, **e.g.** water absorption by the damping device may be reduced.

Accordingly, several benefits may be achieved by the disclosed solution, which may thus provide an improved damping device, in particular a damping device having increased operational safety and providing improved aerodynamic damping.

In an embodiment, at least 50%, preferably at least 70% of the surface of the body may be enclosed in the shell. The body may be fully enclosed by the shell. This may provide an improved rigidity of the whole body.

Preferably, the shell extends at least partly, preferably fully, over the first and/or second protruding sections of the body. The shell may fully extend over both protruding sections and over at least a part of the remaining body. Rigidity of the protruding sections and thus efficient spoiling at high wind speeds may thereby be ensured. Additionally or alternatively, the shell may extend at least over an interface section of the body at which the damping device is in contact with the rotor blade when mounted to the rotor blade.

In some implementations, only parts of the body may be covered by the shell. For example, the shell may be provided to reinforce the body at mounting positions (e.g. as the reinforcement sections described further below). However, it is preferred that the shell covers at least the protruding sections.

The shell may be provided by a coating on the body. This may facilitate manufacturing of the shell. In particular, the shell may easily be adapted to any shape of the body by simply coating the body to provide the shell.

The body may be made of a plastic material, in particular a polymer material. Preferably, the body is made of a low density material. For example, it may be made of a foam material and/or an expanded material.

Preferably, the body is made of polystyrene or polyethylene. The body may be made of a low density material. The body may alternatively be made of polyurethane or polyvinyl chloride material. Preferably, the respective material is a foamed or expanded material. Examples are EPS, EPE, EPP, and expanded PVC. It may be made of EPS comprising pre-expanded polystyrene beads, using which the body can be made by molding or extrusion, or of XPS (extruded polystyrene foam).

The body may consist of the respective material.

The shell may be made of polyurethane material (PU / PUR). For example, a polyurethane coating may be applied to the body to form the shell. In other embodiments, the shell may be formed differently, such as by applying a layer of material, e.g. laying up a layer of fiber fabric and curing a resin infused into the fabric.

The damping device may comprise one or more mounting points, such as apertures, configured to receive a mounting arrangement for mounting the damping device to the rotor blade. A mounting arrangement may comprise one or more of a mounting strap, band, belt, or cord. The strapping of the damping assembly may be performed to ensure a high enough friction between the damping assembly and the rotor blade to avoid relative sliding of the damping assembly on the rotor blade.

The apertures may comprise slits and/or holes.

The one or more mounting points, e.g. apertures, may comprise at least two mounting points (e.g. two apertures) on a side of the damping device that protrudes from a pressure side of the rotor blade when mounted to the rotor blade and/or at least two mounting points (e.g. two apertures) on a side of the damping device that protrudes from a suction side of the rotor blade when mounted to the rotor blade. The at least two mounting points are preferably provided through the respective first and/or second protruding section.

For example, one, two, or more apertures may be provided in the first protruding section, e.g. on a pressure side of the rotor blade when mounted to the rotor blade. One, two, or more apertures may be provided in the second protruding section, e.g. on a suction side of the rotor blade when mounted to the rotor blade.

In an embodiment, the damping device may comprise one, two or more reinforcement sections configured to reinforce a structure of the damping device. The one, two or more reinforcement sections are configured for interacting with a mounting arrangement, preferably a mounting strap, band, belt, or cord, to mount the damping device to the rotor blade.

One continuous reinforcement section may be provided, or plural separate and spaced apart (preferably in longitudinal direction) reinforcement sections may be provided. In some implementations, the reinforcement section may be formed by the shell. However, it is preferred that the one, two or more reinforcement sections are provided in addition to shell or alternatively to the shell.

The reinforcing section may be configured to transfer a pressure applied by the mounting arrangement to the reinforcing section to the body of the damping device.

Additionally or alternatively, the one, two or more reinforcement sections may comprise one, two or more reinforcement sections arranged at an interface section of the damping device and configured to rest against a leading edge or the trailing edge of the rotor blade when the damping device is mounted to the rotor blade. Such a reinforcement section may for example be provided as a lining of the interface section, for example of a recess configured to receive the respective edge of the rotor blade. It is preferred that the interface section covers at least a bottom of the recess. Since at the interface section, pressure acting on the device when the device 10 is mounted to the rotor blade is rather high, the device may efficiently be protected from damage and/or deformation. This may increase the safety, since it allows increasing the pressure with which the device 10 is pressed against the blade, thus reducing the risk of the device 10 becoming dislodged or falling off.

The reinforcement section may partially or fully cover the surface of the recess. It may extend partially or fully over the length of the recess in the longitudinal direction. Preferably, one reinforcement section extending over the length of the interface section is provided, but it is also possible to provide plural reinforcement sections arranged in a spaced-apart relationship in longitudinal direction.

Any of the above one, two or more reinforcement sections may be made from a material different from, in particular stiffer than, a material of which the body of the damping device to which the reinforcement section is attached is made. The reinforcement section is preferably made of a plastic material, such as polyvinyl chloride (PVC).

The reinforcement section may be configured such that it has a higher rigidity and/or has higher resistance against bending or deformation than the body of the damping device and/or the body in combination with the shell of the damping device. For example, a force applied to a certain area of the reinforcement section may result in a smaller deformation of the damping device than application of the same force to the same sized area of the shell and body of the damping device. The force applied to a certain area of the reinforcement section may be distributed over a larger area of the shell and the body, such that the risk of crushing the shell or the body material may be minimized, while at the same time the allowed tensioning force may be increased.

The one, two or more reinforcement sections may be provided in addition to the shell; the one, two or more reinforcement sections may be attached or mounted to the damping device on top of the shell.

The one, two or more reinforcement sections may be arranged such that the mounting arrangement, in particular a strap thereof, passes across each reinforcement section when the damping device is mounted to the blade.

The reinforcement section may have the shape of a cylinder surface section cut parallel to the cylinder axis, in particular a cylinder section having a cross section in form of a circular section, preferably a semi-circular section. For example, a cross section of the or of each reinforcement section may have the shape of a circular or elliptical arc.

The damping device may have a side (e.g. second side wall) that faces away from the rotor blade when the damping device is mounted to the rotor blade. The damping device may have a bulge that bulges outwardly from this side. The bulge may extend in a longitudinal direction of the damping device.

The bulge may be provided on (or by) a sidewall (e.g. the second sidewall mentioned below) of the damping device.

The one, two or more reinforcement sections may be provided on the bulge. They may for example be provided only on the bulge. The one, two or more reinforcement sections may be mounted to the bulge, e.g. adhered by adhesive, resin or the like. Thereby, the reinforcement section may provide a good contact point for the mounting arrangement. Further, the bulge may additionally increase the stiffness of the damping device, in particular if it extends in longitudinal direction thereof.

The damping device may comprise a low-friction material (lower than the friction of the reinforcement section material) at least in a contact area between the reinforcement section and the mounting arrangement, such as a Teflon coating or Teflon tape. The friction between the reinforcement section and the mounting arrangement may thereby be reduced. This may improve the distribution of tensioning forces.

The shape of the reinforcement section may conform to the shape of the bulge.

When the damping device is mounted to the blade, the bulge may protrude most beyond the leading edge (for a leading edge damping device) or trailing edge (for a trailing edge damping device) of the rotor blade. For example, the mounting arrangement, e.g. a strap, passing over the reinforcement section may thus hold the damping device (firmly) in place by exerting pressure on bulge, and the reinforcement section may protect the bulge.

At least two reinforcement sections may be provided at different longitudinal positions along the length of the damping device (e.g. in longitudinal direction), preferably at two different longitudinal positions along the bulge.

The reinforcement sections may be aligned with mounting points, e.g. apertures, for mounting a mounting arrangement, e.g. mounting strap, to the damping device.

For example, one, two or more mounting points, e.g. apertures, may be provided on either side of the bulge (for example in a (second) side wall of the damping device), e.g. on opposite sides of the bulge adjacent to the bulge (e.g. symmetrical arrangement with respect to the bulge).

At least two apertures may be provided through the damping device at a position above the pressure side of the rotor blade and/or at least two apertures may be provided through the damping device at a position above the suction side of the rotor blade when the damping device is mounted to the rotor blade ('above' may refer to a direction perpendicular to the local chordwise direction, pointing away from the respective surface). The apertures may be spaced apart in longitudinal direction.

The damping device may comprise one, two, or more longitudinal mounting positions along the length of the damping device (e.g. in longitudinal direction), wherein at one or more of the longitudinal mounting positions (e.g., at each), a pressure side mounting point (e.g. aperture), a reinforcement section, and a suction side mounting point (e.g. aperture) are provided and are configured to receive a mounting arrangement, such as a mounting strap. The mounting points may lie on opposite sides of the reinforcement section (opposite in a direction perpendicular to the longitudinal direction). The mounting points may for example lie on opposite sides of the bulge.

The mounting arrangement may comprise a mounting strap, band, belt, or cord. The pressure side mounting point, the reinforcement section, and the suction side mounting point may be configured such that the mounting arrangement, e.g. strap, can extend, when the damping device is mounted to the rotor blade, from a pressure side of the rotor blade through the pressure side mounting point (e.g. through the aperture) across the reinforcement section through the suction side mounting point (e.g. through the aperture) towards the suction side of the rotor blade.

The damping device may comprise a low-friction material (lower than the friction of the shell material) at the one, two, or more mounting points at least in a contact area between the respective mounting point and the mounting arrangement (e.g. a strap), such as a Teflon coating or Teflon tape. The friction between the mounting point and the mounting arrangement may thereby be reduced. This may improve the distribution of tensioning forces, e.g. when tensioning such strap.

In other embodiments, the mounting point may be provided differently, e.g. by an eye or loop or the like through which a strap can be fed.

The damping device may extend in a longitudinal direction. The body may have a profile (e.g. cross section) in a direction perpendicular to the longitudinal direction, wherein the profile of the body is substantially the same over at least part of the longitudinal extension of the body. For example, the part of the longitudinal extension of the body, over which the profile is similar or the same, may be at least 50% of the longitudinal extension, or at least 70% of the longitudinal extension, or at least 90% of the longitudinal extension.

The part of the longitudinal extension over which the profile is the same must not be continuous, but may be composed of plural longitudinal sections. The profile may be the same (have the same shape) over the (full) longitudinal extension, with the exception of, e.g., mounting points. This may allow manufacturing of the damping device, in particular the body thereof, by, e.g., foam cutting or extrusion. The mounting points, e.g. apertures, may be introduced thereafter into the damping device or body, for example by cutting respective holes through the first and second protruding sections.

The first protruding section may protrude in a direction pointing away from the pressure side of the rotor blade when mounted to the rotor blade. The first protruding section may for example extend in a direction pointing away from a local chord direction of the rotor blade at the mounting position of the damping device.

The second protruding section may protrude in a direction pointing away from the suction side of the rotor blade when mounted to the rotor blade. The second protruding section may for example extend in a direction pointing away from a local chord direction of the rotor blade at the mounting position of the damping device.

A rotor blade generally has an aerodynamic profile (at least in the outboard parts), and differently shaped profiles may be arranged in the longitudinal direction of the rotor blade (also termed airfoils). The chord or chord line may be defined as the line intersecting the two profile points with the largest mutual distance in the profile of the rotor blade. It may in particular be the line from the leading edge to the trailing edge of the profile. The profile may correspond to a cross section of the rotor blade taken substantially perpendicular to the longitudinal direction (or spanwise direction) of the rotor blade.

A device may thus be provided that is easy to install and that provides efficient damping. The protruding sections may efficiently provide aerodynamic spoiling of the airstream passing the blade and may thereby provide aerodynamic damping. Aerodynamic spoiling may be understood, e.g., as the reduction of vortex generation and/or de-synchronization of vortex shedding so as to reduce vibrations. In technical language this may be referred to as vortex shedding and vortex shedding coherence, respectively.

The damping device may be configured to provide aerodynamic spoiling by increasing turbulence and/or flow separation in a flow around the rotor blade. The damping device may be configured to provide aerodynamic spoiling by reducing a strength of vortices shed from the leading edge or the trailing edge, respectively, of the rotor blade. Further, the damping device may be configured to provide aerodynamic spoiling by reducing or destroying a coherence between periodic flow structures shed at different spanwise positions along the rotor blade. Preferably, the damping device is configured to modify the lift and drag characteristics of the rotor blade in such a way as to generate aerodynamic damping forces which extract energy from the motion of the rotor blade. The damping device may have one or any combination of the above configurations.

The damping device may be an aerodynamic spoiler.

The damping device may be configured to be removably mounted to the leading edge and/or the trailing edge of the rotor blade. It may thus be removed prior to commencement of normal operation, e.g. of power generation, by the wind turbine.

The (main) body may be configured to extend in a longitudinal direction of the rotor blade when mounted to the rotor blade. The damping device, in particular the body, may have a longitudinal extension in a longitudinal direction. The longitudinal direction of the damping device may be substantially parallel to a longitudinal direction of the rotor blade when mounted to the rotor blade (deviations may occur due to the change in chord length along the rotor blade). The longitudinal direction may be substantially perpendicular to a chord direction of the aerodynamic profiles of the rotor blade at the mounting position.

The body may have a first side facing the rotor blade, wherein the first side has an interface section having a shape that is adapted to receive the leading edge or the trailing edge of the rotor blade. The interface section may be configured to rest against the leading edge or the trailing edge, respectively, when the damping device is mounted to the rotor blade. The interface section may for example have a shape that is complementary to a shape of the leading edge or the trailing edge, respectively. By the interface section, the damping device may securely be mounted to the blade, and the mounting may be facilitated.

It is noted that the shape of the interface section must not fully correspond to the shape of the respective rotor blade edge. For example, the same shape of the interface section may be employed at different longitudinal positions on the rotor blade over which the shape of the respective edge changes. The interface section may have a certain (predetermined) compliance, which may allow the interface section to slightly adapt to the shape of the respective edge.

The first and second protruding sections may form part of the body, i.e. the body may include the interface section and the first and second protruding sections; the main body may be a single integral piece. The device may thus have a simple shape, and the device may be manufactured easily and cost efficiently.

The first and second protruding sections may extend in the longitudinal direction of the damping device; they may extend over a whole longitudinal extension of the damping device, e.g. between respective longitudinal end faces. Manufacturing may thereby be facilitated.

The interface section may be provided as a recess in the first side that extends in the longitudinal direction. For example, the recess may comply with leading edge or trailing edge of the rotor blade, **i.e.** may be adapted to the respective shape. Secure mounting may thereby be achieved.

The first side of the damping device may have a substantially flat shape. The interface section may be formed as a recess in the substantially flat shape.

The first and second protruding sections may protrude in (substantially) opposite directions. They may extend in opposite directions away from the interface section.

The first and/or second protruding section may protrude at an angle from the respective pressure side surface or suction side surface of the rotor blade, e.g. at an angle between 30 degrees and 90 degrees, preferably between 60 degrees and 90 degrees. The first and/or second protruding section may be an airflow disturbing section. It should be clear that when the damping device is mounted to the rotor blade, the first and/or section protruding section protrudes outwardly away from the airfoil, i.e. away from the pressure side surface or the suction side surface of the rotor blade.

Preferably, the first protruding section and/or the second protruding section extends in a direction that is (substantially) perpendicular to a chord line of the rotor blade at a mounting position of the damping device. Such configuration may provide an improved aerodynamic spoiling effect. The mounting position may, e.g., be determined by a central position in the longitudinal direction of the damping device. Substantially perpendicular may refer to an angular deviation that is less than +/- 15 degrees, e.g. less than +/- 10 or +/- 5 degrees from perpendicular.

A thickness of the respective protruding section in a direction perpendicular to the first side or side wall may be smaller than a distance by which the respective protruding section protrudes from the surface of the rotor blade.

The first protruding section and/or the second protruding section may have in a cross section taken perpendicular to a longitudinal extension of the damping device a substantially rectangular profile and/or may have at least one or two edges extending substantially parallel to the longitudinal direction of the rotor blade when mounted to the rotor blade and/or may have two side walls and a (substantially planar) end wall defining the shape of the respective protruding section. The two side walls of the respective protruding section may be (substantially) parallel.

A thickness of the damping device in thickness direction may be chosen in accordance with the structural requirements.

The damping device may essentially have the shape of a plate that includes on the first side the interface section and on the second side the bulge, wherein the ends of the plate in height direction provide the first and second protruding sections.

The at least one or two edges may be provided on a side of the protrusion facing away from the rotor blade. At least one of the one or more edges may for example be a sharp or pointed edge. It may in particular be an edge configured to cause flow separation for an air flow passing the blade.

In an embodiment, the first protruding section and the second protruding section protrude in a protrusion direction that is perpendicular to the longitudinal direction of the damping device. The extension of the damping device in the protrusion direction (e.g. between the distant ends of the first and second protruding sections in the protrusion direction; for example in a direction parallel to first and second side walls) may correspond to between 5% and 50% (preferably between 5% and 20%, 8% and 20%, or 10% and 20%) of a chord length of the rotor blade at a mounting position of the damping device on the rotor blade. Such sizing of the protrusions may provide an efficient damping. Other exemplary ranges of the extension in height direction are 10%-40% or 20%-40% of the chord length. If the chord length varies at the mounting position (e.g. over the longitudinal extension of the device), the mean chord length may be employed. The protrusion direction may correspond to a height direction of the damping device.

In another embodiment, the first protruding section and/or the second protruding section may be sized such that when mounted on the rotor blade, the respective protruding section protrudes by a length between 3% and 20%, 5% and 20%, or 5% and 10% of a local chord length of the rotor blade at the mounting position of the damping device from the surface of the rotor blade (e.g. as measured from the surface of the blade in a direction perpendicular to the chord direction). Such sized protrusion may provide efficient aerodynamic damping.

The damping device may have a longitudinal shape having a first side wall and a second side wall extending in a longitudinal direction between a first longitudinal end wall and a second longitudinal end wall of the damping device (e.g. end wall facing tip of rotor blade and end wall facing rotor blade root when mounted). The first sidewall may be configured to face the rotor blade when mounted to the rotor blade and may comprise a recess extending in the longitudinal direction, the recess being configured to receive a leading edge or a trailing edge of the rotor blade. The second sidewall may be configured to face away from the rotor blade when mounted to the rotor blade and may comprise the bulge that extends in the longitudinal direction and bulges outwardly from the second side wall. The bulge may facilitate the mounting, as it may provide a supporting point for a mounting arrangement and it may increase the rigidity of the device.

The recess may be arranged in the first side wall opposite to the bulge in the second side wall.

The first side wall may be substantially parallel to the second side wall, or the first sidewall and the second sidewall may be angled with respect to each other with an angle smaller than 20 degrees, preferably smaller than 10 or 5 degrees. The first and second protruding sections on both sides may thus have a similar thickness.

The first sidewall and the second side wall may be substantially flat with the exception of the recess and the bulge, respectively.

The damping device may have a first lateral wall and a second lateral wall that extend in longitudinal direction between the first sidewall and the second side wall on opposite lateral faces of the damping device.

The first lateral wall and the second lateral wall are substantially flat and/or wherein the first lateral wall and the second lateral wall are substantially parallel.

The bulge may have in a cross section taken perpendicular to the longitudinal direction a section shaped as a substantially circular section, preferably as a semi-circular section, or elliptical section.

When the damping device is mounted to the leading edge or to the trailing edge of the rotor blade, the bulge may be the part of the damping device that protrudes the most beyond the leading edge or the trailing edge, respectively, in a local chordwise direction of the rotor blade at the mounting position of the damping device at the rotor blade. This may facilitate mounting and may provide defined supporting points for the mounting arrangement which may provide a more secure mounting.

The damping device may have an extension in a local chordwise direction of the rotor blade at a mounting position of the damping device that is smaller than an extension of the damping device in a direction perpendicular to the local chordwise direction.

The damping device may have a longitudinal extension (in longitudinal direction) in the range of 0.3 m to 3 m, preferably 0.5 m to 2 m, more preferably 0.7 m to 1 m.

According to a further aspect of the invention, a damping assembly comprising one or more damping devices having any of the configurations disclosed herein is provided. The assembly further comprises a mounting arrangement configured to mount the one or more damping devices to a rotor blade.

The one or more damping devices may comprise a leading edge damping device configured to be mounted to a leading edge of the rotor blade and a trailing edge damping device configured to be mounted to a trailing edge of the rotor blade, preferably at a longitudinal position of the blade opposite to a longitudinal position to which the leading edge damping device is configured to be mounted.

The leading edge damping device may have any damping device configuration described herein, in particular with respect to the mounting on the leading edge, and the trailing edge damping device may have any damping device configuration described herein, in particular with respect to the mounting on the trailing edge.

The mounting arrangement may comprise a mounting strap, band, belt, or cord, the damping assembly being configured to be mounted to the rotor blade by strapping together by the mounting arrangement the leading edge damping device and the trailing edge damping device on opposite sides of the blade in contact with the leading edge and the trailing edge of the blade, respectively.

The one or more damping devices may be mounted to the rotor blade in an airfoil section of the rotor blade, in particular in an outboard section of the rotor blade. For example, they may be mounted in a longitudinal region larger than 40%L, wherein L is the length of the rotor blade and is measured from the blade root. For example, the assembly may comprise plural damping devices configured to be mounted at least in a longitudinal region between 75%L and 85%L of the rotor blade.

The damping assembly may comprise plural pairs of leading edge damping devices and trailing edge damping devices configured to be distributed in a spaced apart arrangement along a longitudinal section of the rotor blade, e.g. in the longitudinal region. Preferably, the damping assembly is configured for mounting to a predefined rotor blade and the number, spacing, and longitudinal extension of the plural pairs of damping devices is selected such that the plural pairs of damping devices extend over at least 10%, 20%, or 40% of the longitudinal length of the predefined rotor blade.

Alternatively, the damping assembly may comprise plural pairs of leading edge damping devices and trailing edge damping devices that are arranged in longitudinal direction of the blade next to each other so as to form a continuous trailing edge damping device and/or a continuous leading edge damping device. The number and longitudinal extension of the plural pairs of damping devices may be selected such that the plural pairs of damping devices extend over at least 10%, 20%, or 40% of the longitudinal length of the predefined rotor blade.

According to a further aspect of the invention, a rotor blade for a wind turbine is provided, wherein the rotor blade comprises one, two or more damping devices having any of the configurations described herein, the one, two or more damping devices being mounted to a leading edge and/or to a trailing edge of the rotor blade, or wherein the rotor blade comprises a damping assembly having any of the configurations described herein and being mounted to the rotor blade.

The rotor blade may comprise a blade body having the leading edge, a suction side with a suction side surface, a pressure side with a pressure side surface, and the trailing edge.

The blade may have a length L (extension in longitudinal direction) larger than 25 m, 30 m, 50 m, or 80 m.

According to a further aspect of the invention, a method for damping vibrations of a rotor blade is provided, wherein the method comprises mounting one, two or more damping devices having any of the configurations described herein to a leading edge and/or to a trailing edge of the rotor blade or mounting a damping assembly having any of the configurations described herein to the rotor blade.

The rotor blade may be in a non-operational state when the one, two or more damping devices or the damping assembly are/is mounted to the rotor blade and are/is damping vibrations of the rotor blade. For example, the one, two or more damping devices or the damping assembly may be mounted to the rotor blade prior to a lifting operation of the rotor blade by which the rotor blade is to be mounted to a hub of a wind turbine.

The method may further comprise unmounting the one, two or more damping devices or the damping assembly from the rotor blade prior to operating the rotor blade in an operational state in which a wind turbine comprising the rotor blade generates power. The unmounting of the damping devices may occur when the rotor blade is mounted to a hub of a wind turbine.

According to a further aspect of the invention, a method of manufacturing a damping device having any of the configurations described herein is provided. The method may comprise manufacturing the body of the damping device, for example by means of foam cutting or extrusion. Optionally, the method may comprise providing the body with a reinforcement layer or shell, in particular by coating the body. Optionally, the method may further comprise providing a reinforcement section on the damping device, in particular in an area of the damping device configured to interact with a mounting arrangement and/or providing one or more mounting points for receiving a mounting arrangement on the damping device, for example by cutting or otherwise providing one or more respective apertures in the body, before or after providing the shell. The method may further comprise any steps to obtain the damping device in any of the disclosed configurations.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a section of a wind turbine rotor blade including a damping device according to an embodiment.
Fig. 2 is a schematic drawing showing a section of a wind turbine rotor blade and plural differently sized leading edge and trailing edge damping devices according to an embodiment.
Fig. 3 is a schematic drawing showing a cross sectional view of a wind turbine rotor blade and plural differently sized leading edge and trailing edge damping devices according to an embodiment.
Fig. 4 is a schematic drawing showing a perspective view of a damping device according to an embodiment.
Fig. 5 is a schematic drawing showing a top view of two rotor blade sections including damping devices according to an embodiment.
Fig. 6 is a schematic drawing showing a perspective view of two rotor blade sections including damping devices according to an embodiment.
Fig. 7 is a flow diagram illustrating a method according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

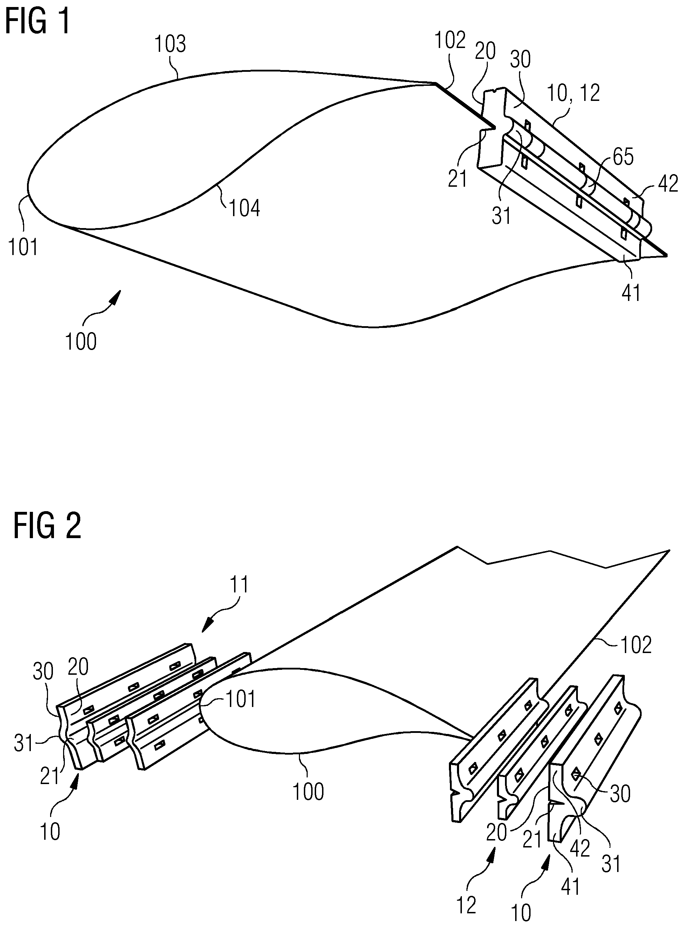

Figure 1 shows a rotor blade 100 with a leading edge 101, a trailing edge 102, a suction side 103 and a pressure side 104. A damping device 10 is provided and configured to be installed on the leading edge 101 of the rotor blade as a leading edge damping device 11 or on the trailing edge 102 of the rotor blade as a trailing edge damping device 12, the latter being shown in figure 1.

In figure 1, to damp blade vibrations, e.g. to reduce oscillations, the damping device 10, e.g. an aerodynamic spoiler device, is installed on the trailing edge 102 of the airfoil sections of the outer portion of the blade, and a respective leading edge damping device may also be installed.

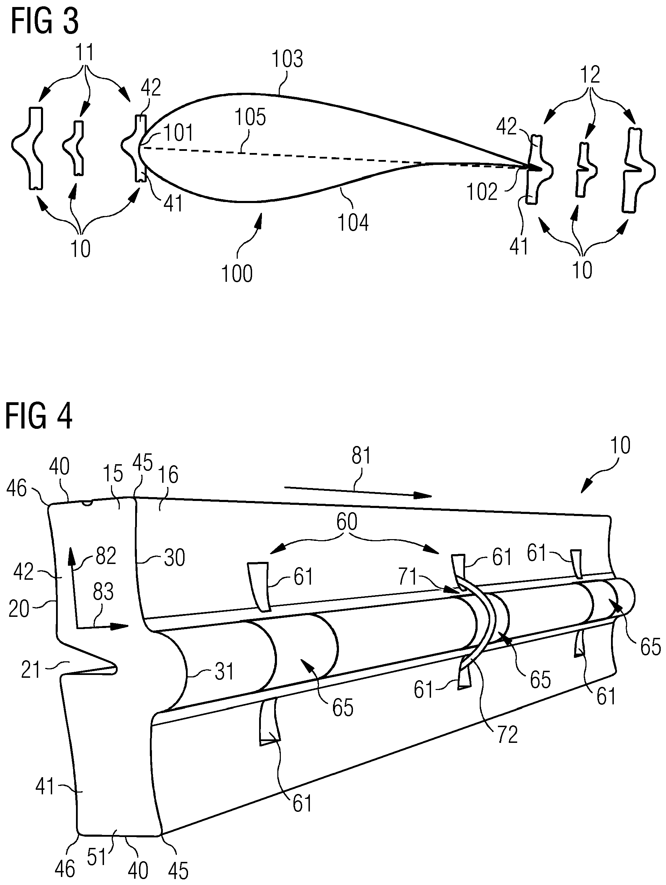

The leading and trailing edge damping devices 11, 12 may have a sizing that scales approximately with the chord length of the rotor blade at the mounting position, meaning that larger devices 10 are mounted on larger airfoil sections, or at least a number of different sizes may be made available in order to size correctly each spanwise location of the blade (see figures 2 and 3). For example, at least the size in height direction 82, and optionally the width in width direction 83 may be adapted to the chord length (figure 4).

The leading edge damping device 11 (figure 2) has an interface section towards the blade 100 having a geometry which complies with the leading edge 101 shape of the blade. It has a first side wall 20 facing the rotor blade. The interface section is provided by a recess 21 adapted to the shape of the leading edge 101. Furthermore, the leading edge damping device 11 has a surface (second side wall 30) that points away from the rotor blade 100, which is provided with a bulge 31 that has a roughly semi-circular shape in cross section in order to increase the bending stiffness of the damping device 10. The recess 21 and the bulge 31 lie on opposite sides (in thickness direction 83) of the damping device, at about the same position in height direction 82 (see also figure 4).

Similarly, the trailing edge damping device 12 has an interface section towards the blade having a geometry which complies with the trailing edge 102 shape of the rotor blade. It has a first side wall 20 facing the rotor blade. The interface section is provided by a recess 21 adapted to the shape of the trailing edge 102 (figures 1, 2 and 4). Furthermore, the trailing edge damping device 12 has a surface (second side wall 30) that points away from the rotor blade 100, which is provided with a bulge 31 that has a roughly semi-circular shape in cross section in order to increase the bending stiffness of the damping device 10.

The leading and trailing edge damping devices 11, 12 may include mounting points 60, for example apertures 61, e.g. slits or holes, as shown in figure 4, allowing them to be interconnected to each other by means of a mounting arrangement 71, e.g. by a tensioning strap 72.

Each of the leading edge and trailing edge damping device 11, 12 may have a height (e.g. an extension in a height direction 82, which may be substantially perpendicular to the chord direction of the rotor blade when mounted to the rotor blade) in the order of magnitude of 5%-50%, preferably 5% to 20%, e.g. 10-20% of the chord length at the mounting position of the damping device. The height may for example be measured in height direction 82 between the upper and lower ends of the damping device, i.e. between the lateral walls 40 (figure 4).

Both the leading edge damping device 11 and the trailing edge damping device 12 may be reinforced at specific locations as shown in exemplary manner for the trailing edge device in figure 1 or more generally in figure 4. The reinforcement may comprise a reinforcement section 65, preferably plural distributed along the longitudinal length of the device 10. The reinforcement section 65 may be provided on the bulge 31.

The mounting arrangement 71 may be supported at the reinforcement section 65, e.g. the strap 72 may bear against the reinforcement section 65 when mounted to the blade.

Additionally or alternatively, the reinforcement may comprise a reinforcement section (not shown) arranged at the interface section, e.g. at the recess 21, for interacting with the respective leading or trailing edge of the rotor blade. The reinforcement section may partially or fully line the recess 21; it is preferred that it lines at least the bottom of the recess. The reinforcement section may extend partly (e.g. as distinct longitudinal sections) or fully over the length of the damping device 10 in longitudinal direction 81.

To avoid significant increase in weight of the turbine blades, the damping device 10 may have a pre-cut geometry. Device 10, in particular body 15, may be produced in lightweight material, also referred to as low density material, e.g. a plastic material. For example, it may have a body 15 made of, e.g., polystyrene (e.g. foamed/expanded polystyrene) or polyethylene. To attach this material by the mounting arrangement 71 to the rotor blade 100 and avoid damaging the device material when tightening, the reinforcement section 65 can be provided on the device 10.

The reinforcement section 65 may be provided in the form of a semi-circular cylinder jacket reinforcement section as shown in figure 1 or 4. The reinforcement section 65 can for example be made of a plastic material such as polyvinyl chloride (PVC) or any other suitable stiff plastic material.

In order to maintain the integrity of the lightweight material of the body 15, the body 15 may be provided with a shell 16 which may surround the body 15 and may be made of a semi-rigid or slightly flexible material such as polyurethane (PU, PUR). For example, a respective coating may be applied as the shell 16 to the body 15. The PU or PUR coating may work as a stiffening and toughening addition to the original characteristics of the device 10. It may provide the device 10 with a better structural stability. The shell 16 may be combined with the local reinforcement section(s) 65 at the mounting points 71, e.g. strap attachment points. This may provide a robust and resilient design. Examples of the shape and the reinforcement are shown in figures 1 and 4.

Such configuration of the damping device 10 may provide a lightweight design, a higher toughness and resilience compared to pure foam solutions. It may further be easier to apply enough pressure from the mounting arrangement 71, which reduces the risk that a device 10 or a part thereof falls off the rotor blade. By providing a lightweight damping device 10 and further ensuring secure attachment, the risk of a damping device becoming detached and the risk of personal injury, should a person be hit by a falling damping device, can be reduced significantly.

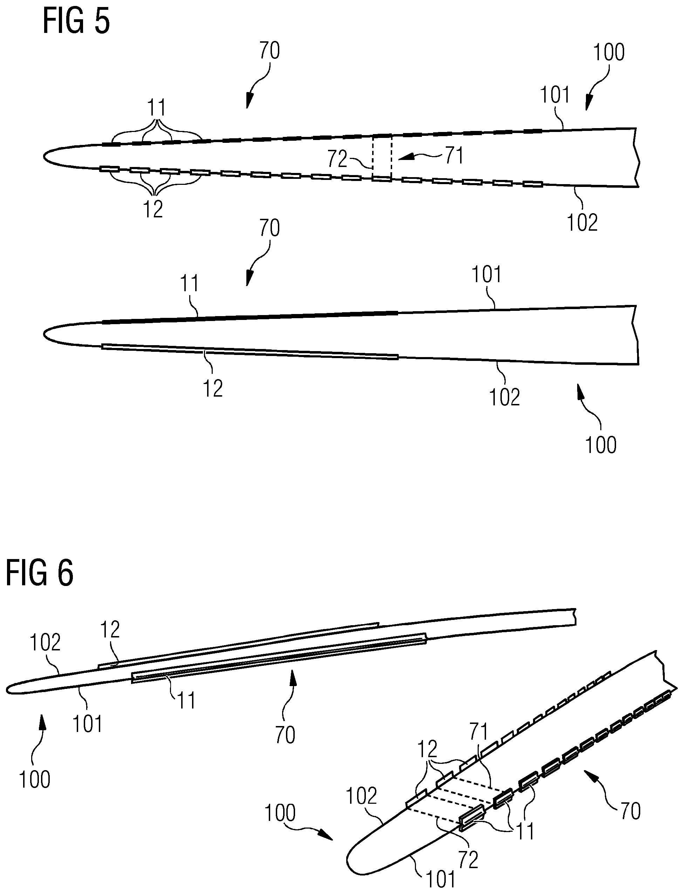

On each of the leading edge and the trailing edge, plural damping devices 10 might be installed contiguous to each other (lower part of figure 5 and upper part of figure 6) or with a spacing in between neighbouring devices, as shown in the upper part of figure 5 and the lower part of figure 6. Each damping device may have a total length (in longitudinal direction) between 0.3 and 3 m, preferably between 0.5 m and 2 m, or 0.7 m and 1.2 m, for example about 1 m. Very large pieces may thereby be avoided. This may facilitate mounting of the damping devices to the blade. Further, in view of their longitudinal extension, fewer damping devices are needed to equip a longitudinal range of the blade.

One or more damping devices 10 and the mounting arrangement 71 may form a damping assembly 70. Preferably, the damping assembly 70 comprises at least a leading edge damping device 11, a trailing edge damping device 12, which are configured to be mounted to the opposite edges 101, 102 of the blade at about the same longitudinal position of the blade. The devices 11, 12 may be fixed to the blade 100 by tensioning a strap 72 of the mounting arrangement, which may be led through the apertures 61 and across the reinforcement section 65 (please see figure 4). Thus, the strap can be tensioned without causing damage to the devices 11, 12 while ensuring secure mounting to the rotor blade 100. Further, by mounting leading edge and trailing edge damping devices having a similar shape, it may be ensured that efficient aerodynamic damping is provided for different directions of the wind hitting the blade.

The leading edge and trailing edge damping devices 11, 12 may form a pair. Figure 3 shows different sizing of pairs of damping devices. The size of the damping device for a particular mounting position in longitudinal direction of the blade may be chosen in dependence on the chord length at the mounting position.

Damping assembly 70 may comprise plural respective pairs of devices 11, 12. They can be distributed lengthwise with a spacing along the rotor blade or they may form continuous spoiler elements, as shown in figures 5 and 6.

Although it is possible to provide a single large damping device 10 for each of the leading edge and trailing edge, the providing of segments (i.e. plural shorter devices 10) is preferred, as it may facilitate the installation.

A further benefit may be that separate leading edge and trailing edge damping devices can be provided, which may include apertures for tensioning straps. The geometry of the damping devices 10 may enhance both the aerodynamic spoiling effect as well as the devices' inherent structural stiffness. Further, the installation procedure is simple and can be carried out efficiently. The solution may result in low cost both for the device itself as well as for the installation procedure.

Figure 4 shows a damping device 10 in detail. Although a trailing edge device is shown, the explanations apply equally to a leading edge damping device. The damping device 10 has a longitudinal extension in the longitudinal direction 81, e.g. between the longitudinal end walls 51. The longitudinal direction 81 may be substantially parallel to the longitudinal direction of the rotor blade (i.e. the spanwise direction) when mounted thereto, as shown in figure 1. The damping device 10 further comprises the first protruding section 41 and the second protruding section 42. These may extend in opposite directions, in particular in the height direction 82. When mounted to the rotor blade, the height direction is preferably substantially perpendicular to the chord line 105 of the rotor blade, as shown in figure 3. Substantially perpendicular means that there can be a deviation such as less than +/- 10 or +/- 5 degrees. Although the protruding sections 41, 42 are shown to extend in opposite directions along the height direction 82, they may in other embodiments extend in different directions (e.g. at different angles to the chord line) and may not extend in opposite directions.

As shown in figures 1 and 3, when the device 10 is mounted to the rotor blade 100, the first protruding section 41 protrudes outwardly from the pressure side 104 of the blade and the second protruding section 42 protrudes outwardly from the suction side 103 of the rotor blade 100.

The first and second protruding sections 41, 42 are formed by the end of the side walls 20, 30 in the height direction, and the respective lateral wall 40. As can be seen, in cross section, the first and second protruding sections 41, 42 thus have a substantially rectangular profile. In particular, edges 45 and 46 are formed that extend in the longitudinal direction 81. It is noted that the edges 45, 46 may be rounded, although it is preferred that they may retain a certain pointedness or sharpness. Such edge may cause a flow separation of an airstream passing the blade, which may significantly increase the aerodynamic damping provided by the damping device 10. In other embodiments, the side walls 20, 30 may not be parallel in the region of the protruding sections 41, 42; for example, they may approach each other to form a single edge, of may have another shape.

The damping device may further extend in a thickness direction 83. Thickness direction 83 may for example correspond to a direction in which the respective edge is received in the interface section, e.g. in the recess 21, and/or may be substantially perpendicular to first or second side wall 20, 30 in a region of one or both protruding sections 41, 42. Thickness direction 83 may be perpendicular to the longitudinal direction 81 and the height direction 82, which may likewise be perpendicular to each other.

As visible in figure 4, the profile of damping device 10 perpendicular to the longitudinal direction 81, in particular of the body 15, is substantially the same along the longitudinal extension thereof, i.e. at different positions in the longitudinal direction 81. Exceptions are only the mounting features of the damping device, in particular the mounting apertures 61. They do however not affect the general outline of the profile. This allows manufacturing of the damping device 10, in particular of body 15, by simple methods, such as foam cutting or extrusion.

The shell 16 may be applied to the body, for example by applying a coating. The body 15 may for example be spray-coated or dip-coated to form the shell 16. Thus, shell 16 may cover substantially the whole body 15. In other examples, only part of the body 15 may be provided with shell 16, e.g. in areas of the protruding sections 41, 42, and/or in the areas in which the mounting arrangement 71 interacts with the damping device 10, for example in areas of the mounting points 60 and of the bulge 31 where the strap 72 extends.

The reinforcement sections 65 may be applied after providing the shell 16, i.e. they may be applied on top of the shell 16. In other implementations, the no shell may be provided in areas of the reinforcement sections 65, or the shell may be applied on top of the reinforcement sections 65.

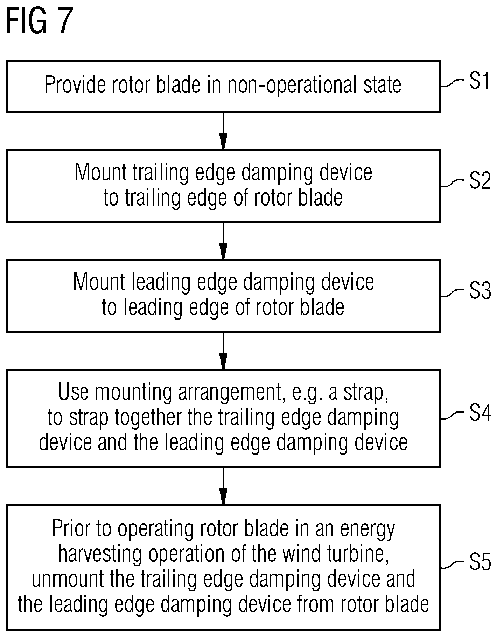

Figure 7 shows a flow diagram of a method that may be carried out for mounting and unmounting damping devices 10 according to an embodiment. In step S1, rotor blade 100 is provided in non-operational state, e.g. it may be provided during an installation procedure, it may be provided on the rotor in an idle state or parking position of the wind turbine etc. In step S2, a trailing edge damping device 12 is mounted to the trailing edge of rotor blade. In step S3, a leading edge damping device 11 is mounted to the leading edge of rotor blade. In step S4, the mounting arrangement 71, e.g. a strap 72, is used to strap together the trailing edge damping device and the leading edge damping device, for example by leading the strap 72 through apertures 61 and across the reinforcement sections 65 on the leading and trailing edge damping devices. Plural further pairs of damping devices 10 may further be mounted to the rotor blade in a corresponding manner.

In such state, the rotor blade may efficiently be protected against excessive vibrations and oscillation. The blade may in such protected state be mounted to a hub of the wind turbine. In step S5, prior to operating rotor blade in an energy harvesting operation of the wind turbine, the trailing edge damping device(s) and the leading edge damping device(s) are unmounted from the rotor blade. These are accordingly not used during normal operation of the wind turbine. It should be clear that the order of the steps of the method can be changed (e.g. order of steps S2 and S3) and that some steps of the method are optional.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### List of reference signs:

- 10: damping device
- 11: leading edge damping device
- 12: trailing edge damping device
- 15: body of damping device
- 16: shell of damping device
- 20: first side wall on first side
- 21: recess
- 30: second side wall
- 31: bulge
- 40: lateral wall
- 41: first protruding section
- 42: second protruding section
- 45: first edge
- 46: second edge
- 51: longitudinal end wall
- 60: mounting point
- 61: aperture
- 65: reinforcement section
- 70: damping assembly
- 71: mounting arrangement
- 72: strap
- 81: longitudinal direction
- 82: height direction
- 83: thickness direction
- 100: rotor blade
- 101: leading edge of rotor blade
- 102: trailing edge of rotor blade
- 103: suction side of rotor blade
- 104: pressure side of rotor blade
- 105: chord line of rotor blade profile

## Claims

1. A damping device for a rotor blade of a wind turbine, wherein the damping device (10) is configured to damp vibrations of the rotor blade (100) in a non-operating condition of the rotor blade when mounted to the rotor blade (100),
wherein the damping device (10) comprises a body (15) configured to be mounted to the rotor blade (100),
wherein the body (15) has a first protruding section (41) configured to protrude from a pressure side (104) of the rotor blade when the damping device is mounted to the rotor blade and/or wherein the body (15) of the damping device (10) has a second protruding section (42) that is configured to protrude from a suction side (103) of the rotor blade when the damping device (10) is mounted to the rotor blade,
wherein the body (15) is made of a plastic material,
wherein the body (15) is at least partially enclosed in a shell (16), and
wherein a rigidity, hardness, and/or a density of a material of the shell (16) is higher than a rigidity, hardness, and/or a density, respectively, of the material of the body (15).

2. The damping device according to claim 1, wherein at least 50%, preferably at least 70% of the surface of the body (15) is enclosed in the shell (16), or wherein the body (15) is fully enclosed in the shell (16).

3. The damping device according to claim 1 or 2, wherein the shell (16) extends at least partly, preferably fully, over the first protruding section (41) and/or the second protruding section (42) of the body (15).

4. The damping device according to any of the preceding claims, wherein the shell (16) is provided as a coating on the body (15).

5. The damping device according to any of the preceding claims, wherein the body (15) is made of a low density material, preferably a foam material and/or an expanded material.

6. The damping device according to any of the preceding claims, wherein the body (15) is made of polystyrene, polyethylene, polyurethane, or polyvinyl chloride material, preferably from a respective foamed or expanded material.

7. The damping device according to any of the preceding claims, wherein the shell (16) is made of a polyurethane material.

8. The damping device according to any of the preceding claims, wherein the damping device comprises one or more mounting points (60), such as apertures (61), configured to receive a mounting arrangement (71), in particular a mounting strap (72), band, belt, or cord, for mounting the damping device (10) to the rotor blade (100).

9. The damping device according to claim 8, wherein the one or more mounting points (60) comprise at least two mounting points on a side of the damping device (10) at which the first protruding section (41) protrudes from the pressure side (104) of the rotor blade when mounted to the rotor blade and/or at least two mounting points on a side of the damping device (10) at which the second protruding section (42) protrudes from the suction side (103) of the rotor blade when mounted to the rotor blade (100), wherein the at least two mounting points (60) are preferably provided through the respective protruding section (41, 42).

10. The damping device according to any of the preceding claims, wherein the damping device (10) comprises one, two or more reinforcement sections (65) configured to reinforce a structure of the damping device (10), wherein the one, two or more reinforcement sections (65) comprise one, two or more reinforcement sections (65) configured for interacting with a mounting arrangement (71), preferably a mounting strap (72), band, belt, or cord, to mount the damping device (10) to the rotor blade (100), and/or wherein the one, two or more reinforcement sections (65) comprise one, two or more reinforcement sections (65) arranged at an interface section (21) of the damping device and configured to rest against a leading edge or the trailing edge of the rotor blade when the damping device (10) is mounted to the rotor blade.

11. The damping device according to claim 10, wherein the one, two or more reinforcement sections (65) are made from a material different from, in particular stiffer than, a material of which the body (15) of the damping device is made, wherein the one, two or more reinforcement sections (65) are preferably made of a plastic material, such as Polyvinyl Chloride, PVC.

12. The damping device according to claim 10 or 11 when dependent on claim 8, wherein the damping device (10) comprises one, two, or more longitudinal mounting positions along a longitudinal direction of the damping device (10), wherein at one or more of the longitudinal mounting positions, a pressure side mounting point (60), a reinforcement section (65), and a suction side mounting point (60) are provided and are configured to receive a mounting arrangement (71),
wherein preferably, the mounting arrangement (71) comprises a mounting strap (72), band, belt, or cord, wherein the pressure side mounting point, the reinforcement section, and the suction side mounting point are configured such that the mounting arrangement (71) can extend, when the damping device (10) is mounted to the rotor blade (100), from a pressure side (104) of the rotor blade through the pressure side mounting point (60) across the reinforcement section (65) through the suction side mounting point (60) towards the suction side (103) of the rotor blade (100).

13. The damping device according to any of the preceding claims, wherein the damping device (10) has a side that faces away from the rotor blade when the damping device is mounted to the rotor blade, wherein the damping device has a bulge (31) that bulges outwardly from this side, the bulge (31) extending in a longitudinal direction (81) of the damping device (10),
wherein preferably, at least one, two or more reinforcement sections (65) are provided on the bulge.

14. A damping assembly comprising plural damping devices (10) according to any of the preceding claims, wherein the plural damping devices comprise at least a leading edge damping device (11) configured to be mounted to a leading edge (101) of the rotor blade and a trailing edge damping device (12) configured to be mounted to a trailing edge (102) of the rotor blade, and wherein the damping assembly (70) further comprises a mounting arrangement (71) configured to mount the damping devices (11, 12) to the rotor blade (100).

15. A method for damping vibrations of a rotor blade, wherein the method comprises mounting one, two or more damping devices (10) according to any of claims 1-13 to a leading edge (101) and/or to a trailing edge (102) of the rotor blade (100) or mounting a damping assembly (70) according to claim 14 to the rotor blade (100).
